# EUROPEAN PATENT SPECIFICATION

(11) **EP 2 025 719 B1**
(45) Date of publication and mention of the grant of the patent: **24.04.2013**
(21) Application number: 07767030.5
(22) Date of filing: 04.06.2007
(51) Int. Cl.: C09D 11/02

(54) **PROCESS FOR PRODUCTION OF AZO COMPOUND**
VERFAHREN ZUR HERSTELLUNG EINER AZO-VERBINDUNG
PROCÉDÉ DE FABRICATION D'UN COMPOSÉ AZOÏQUE

(30) Priority: 02.06.2006 JP 2006154615
(43) Date of publication of application: 18.02.2009
(73) Proprietor: DIC Corporation, Tokyo 174-8520 (JP)
(72) Inventor: OGATA, Akihiro, Kamisu-shi, Ibaraki 314-0193 (JP); KOBAYASHI, Nagatoshi, Kamisu-shi, Ibaraki 314-0193 (JP); HANDA, Haruhisa, Takaishi-shi, Osaka 592-0001 (JP)
(74) Representative: Albrecht, Thomas
(86) International application number: PCT/JP2007/061282
(87) International publication number: WO 2007/142185

(56) References cited:
- EP-A1- 1 990 374
- WO-A1-2006/121018
- WO-A1-2006/121018
- DE-A1- 3 334 811
- GB-A- 2 129 434
- JP-A- 59 086 660
- US-A- 5 399 014

## Description

The present invention relates to a process for producing an azo compound that requires less energy consumption and exhibits superior productivity to conventional processes.

### BACKGROUND ART

Insoluble azo pigments are produced by a coupling reaction under agitating of raw materials containing no carboxyl groups or sulfonic acid groups. In contrast, soluble azo pigments are produced by forming an azo dye by conducting a coupling reaction under agitating of raw materials containing carboxyl groups and/or sulfonic acid groups, and subsequently laking the azo dye under agitating using an inorganic polyvalent metal salt. Because these reactions are all conducted in water-based systems, the reaction liquid is usually a pigment water suspension. If required, the pigment water suspension obtained in the above manner may be heated and filtered, and then used as a colorant in a wet state, or alternatively, this wet-state azo pigment may be dried and pulverized, with the resulting dry product such as a powder or granules used as the colorant.

Examples of the agitating blade provided in the agitator used during the above type of reaction have conventionally included anchor blade, turbine blade, paddle blade, Pfaudler blade, Maxblend blade, (SHI Mechanical & Equipment Inc.), and Fullzone blade, (Kobelco Eco-Solutions Co., Ltd.).

In the coupling reaction during the production of the azo dye that functions as a precursor to the insoluble azo pigment or azo lake pigment, agitating and mixing of the liquid are conducted, but the nature of the agitating blade provided within the agitator used for conducting this agitating and mixing tends to be determined independently by each manufacturer on a trial and error basis, and public documents that reveal specific structures are essentially unknown.

In terms of the method used for agitating and mixing the reaction liquid, methods that involve agitating at a slow speed over an extended period are known, as are methods that involve agitating at higher speeds for shorter periods. Generally, conducting agitating at a lower level of energy consumption causes deterioration in the productivity, whereas ensuring an excellent level of productivity makes reductions in the level of energy consumption impossible, meaning the two properties exist in a trade-off type relationship.

Recently, in the case of disazo pigments, processes such as those disclosed in patent reference 1 have been proposed, wherein the azo compound is produced by a coupling reaction in which the power required for the agitating and the shear rate at the tips of the agitating blade are set within predetermined ranges. However, the energy consumption of the agitating process is still considerably high, and a process for producing an azo compound that exhibits low energy consumption and superior productivity is still unknown.
[Patent Reference 1]
Japanese Unexamined Patent Application, First Publication No. 2006-28341
GB 2 129 434 A discloses a continuous process for the production of azo compounds, wherein the coupling including laking of metal salt pigments or precipitating of soluble azo compounds is carried out in a multicompartment mixer, wherein the residence time in the first compartment is from 5 to 200 seconds. The diazo compound may also be made continuously using a multicompartment mixer.

### DISCLOSURE OF INVENTION

An object of the present invention is to provide a process for producing an azo compound that requires less energy consumption and exhibits superior productivity to conventional processes.

As a result of intensive investigation aimed at achieving mass production of an azo compound at a high level of productivity by conducting a coupling reaction at a lower level of energy consumption than conventional processes, without introducing new equipment such as microjet reactors, but rather employing extremely common equipment, the inventors of the present invention discovered that by conducting the coupling reaction using an agitator fitted with agitating blades of a specific shape, the drawbacks associated with the conventional technology described above could be resolved, and they were therefore able to complete the present invention.

In other words, the present invention provides a process for producing an azo compound that includes conducting coupling of a diazo component formed from a diazonium salt of an aromatic amine, and a coupler component formed from a naphthol and/or an acetoacetanilide, wherein
at least the coupling is conducted within an agitator that has a rotational axis fitted with a main agitating blade and an auxiliary agitating blade inside an agitating tank, and
in the agitator,
the main agitating blade has tips that are separated from the inner wall surface of the agitating tank so as to generate a rising liquid current during agitating, and is positioned at the lowest point on the central axis,
whereas the auxiliary agitating blade has scrapers close to the inner wall of the agitating tank that are either arranged vertically, or inclined so as to push the liquid up during rotation, and has paddles that are connected to the scrapers and are either arranged vertically, or inclined so as to push the liquid down during rotation, and
vertically adjacent agitating blades are positioned so that the top edge of the lower agitating blade exhibits a phase lag relative to the bottom edge of the upper agitating blade in the opposite direction to the direction of rotation of the rotational axis.
In the present invention, the central axis refers to the rotational axis.

In the production process of the present invention, because the coupling reaction is conducted using an agitator fitted with agitating blades of a specified shape, a remarkable effect is achieved in that an azo compound can be obtained with less energy consumption and superior productivity to conventional processes.

### BRIEF DESCRIPTION OF THE DRAWINGS

FIG. 1 is a side view of an agitator used in Example 1.
FIG. 2 is a side view of an agitator fitted with agitating blades of a specific shape, as used in Comparative Example 1.
FIG. 3 is a side view of an agitator fitted with Fullzone blades as the agitating blades, as used in Comparative Example 2.

The reference numerals shown in these figures are defined as follows:
1 represents a rotational axis; 2 represents a bottom paddle; 3 represents a paddle; 4 represents a scraper; 5 represents an agitating tank; 20 represents a main agitating blade; and 30 represents an auxiliary agitating blade.

### BEST MODE FOR CARRYING OUT THE INVENTION

A more detailed description of the present invention is provided below.
A production process of the present invention is a process for producing an azo compound that includes conducting coupling of a diazo component formed from a diazonium salt of an aromatic amine, and a coupler component formed from an aromatic compound other than the aromatic amine used in forming the diazonium salt, wherein at least the coupling is conducted within an agitator that has a rotational axis fitted with a main agitating blade and an auxiliary agitating blade inside the agitating tank, the main agitating blade has tips that are separated from the inner wall surface of the agitating tank so as to generate a rising liquid current during agitating and is positioned at the lowest point on the central axis, whereas the auxiliary agitating blade has scrapers close to the inner wall of the agitating tank that are either arranged vertically, or inclined so as to push the liquid up during rotation, and has paddles that are connected to the scrapers and are either arranged vertically, or inclined so as to push the liquid down during rotation, and moreover, vertically adjacent agitating blades are positioned so that the top edge of the lower agitating blade exhibits a phase lag relative to the bottom edge of the upper agitating blade in the opposite direction to the direction of rotation of the rotational axis.

In the present invention, an azo compound is a generic term for a compound that contains at least one azo linkage represented by -N=N- within each molecule. The term azo compound includes both azo dyes and azo pigments.
The production process of the present invention can be applied to the production of conventional azo pigments such as insoluble azo pigments, condensed azo pigments and soluble azo pigments (hereafter, soluble azo pigments may also be referred to as azo lake pigments). Azo pigments are produced using a process that includes, as an essential step, conducting a coupling reaction between a diazo component formed from a diazonium salt of an aromatic amine, and a coupler component formed from an aromatic compound other than the aromatic amine used in generating the diazonium salt (hereafter, the combination of the two components may be referred to as simply the raw materials).

Insoluble azo pigments are produced, for example, by conducting a coupling reaction, under agitating, of raw materials that contain no carboxyl groups or sulfonic acid groups (hereafter also referred to as water-soluble groups). Condensed azo pigments are produced, for example, by conducting a coupling reaction, under agitating, of raw materials that contain water-soluble groups, subsequently converting the product to an acid chloride using thionyl chloride or the like, and then conducting a dehydrochlorination reaction with a primary diamine or the like. Soluble azo pigments are produced, for example, by preparing an azo dye by conducting a coupling reaction, under agitating, of raw materials that contain water-soluble groups, and then laking this azo dye, under agitating, using an inorganic polyvalent metal salt.

Azo pigments are always produced via a step that involves conducting a coupling reaction of the raw materials under agitating, and the production process of the present invention, which uses a specific agitator described below, can be applied to any form of azo pigment.

In the production process of the present invention, a specific agitator having a rotational axis fitted with a main agitating blade and an auxiliary agitating blade inside the agitating tank is used to conduct the coupling reaction between the diazo component and the coupler component.

The diazo component and coupler component that act as the raw materials can be produced easily using conventional methods. The diazonium salt of the aromatic amine contained within the diazo compound can be obtained, for example, by reacting an aromatic amine and a nitrite. The aromatic compound contained within the coupler component can use an aromatic compound other than the aromatic amine used in forming the diazonium salt.

Examples of the aromatic amine include aromatic diamines containing no water-soluble groups, such as 3,3'-dichlorobenzidine and 1,2-bis(2-aminophenoxy)ethane, aromatic monoamines containing no water-soluble groups, such as aniline and p-toluidine, and aromatic monoamines that contain a water-soluble group, such as 4-aminotoluene-3-sulfonic acid, (4B acid: p-toluidine-m-sulfonic acid), 4-amino-2-chlorotoluene-5-sulfonic acid (2B acid), 3-amino-6-chlorotoluene-4-sulfonic acid (C acid), 1-amino-4-methylbenzene-3-sulfonic acid, 2-aminonaphthalene-1-sulfonic acid (tobias acid), and 1-amino-3-methylbenzene-4-sulfonic acid. These compounds may also be used in combinations of two or more different compounds.

On the other hand, examples of the aromatic compound other than the aromatic amine used in generating the diazonium salt include naphthols and/or acetoacetanilides. Examples of naphthols include naphthols containing no water-soluble groups, such as β-naphthol and naphthol AS, and naphthols that contain a water-soluble group, such as 3-hydroxy-2-naphthoic acid (β-oxynaphthoic acid; BON acid). Examples of acetoacetanilides include acetoacetanilides containing no substituent groups on the benzene ring or naphthalene ring, such as acetoacetanilide, and acetoacetanilides containing a hetero ring, such as acetoacetylamino-benzimidazolone. Of course, this aromatic compound is not restricted to the above compounds, and derivatives of the above compounds, such as compounds in which a hydrogen atom on the benzene ring or naphthalene ring has been substituted with a lower alkyl group, alkoxy group or halogen atom, can also be used. These compounds may also be used in combinations of two or more different compounds.

By reacting an aromatic amine and a nitrite in an aqueous medium using a conventional method, a diazo component formed from an aqueous solution or aqueous suspension containing a diazonium salt of an aromatic amine can be obtained. On the other hand, by dissolving an aromatic compound in an aqueous medium in the presence of a base, a coupler component formed from an aqueous solution of the aromatic compound can be obtained.

Examples of the azo compounds that can produced via the production process of the present invention include insoluble azo pigments such as C.I. Pigment Yellow 12, 13 and 14, and soluble azo pigments such as C.I. Pigment Red 48:1, 48:2, 48:3, 52:1 and 57:1. Of these, soluble azo pigments are preferred as the reduction in energy consumption achievable when using the production process of the present invention is higher, and C.I. Pigment Red 57:1, which has conventionally required high energy consumption agitating in order to achieve favorable mixing properties, exhibits the most marked reduction in energy consumption upon using the production process of the present invention, and is therefore particularly preferred.

The process for producing an azo compound according to the present invention is ideal for producing an azo compound via a coupling reaction using a diazo component that includes a diazonium salt of an aromatic monoamine that contains a carboxyl group and/or sulfonic acid group (a water-soluble group), and a coupler component that includes a β-naphthol and/or β-oxynaphthoic acid.

With the exception of using the specific agitator described above, the coupling reaction in the present invention can be conducted using conventional methods, for example by supplying each of the above raw materials to the agitating tank, and then conducting agitating using the above agitator.

Examples of methods of conducting the coupling reaction include the methods described below.
(1) Methods that involve preparing an aqueous solution containing the coupler component and an aqueous solution or water suspension containing the diazo component, charging the agitating tank used in the present invention with the aqueous solution containing the coupler component, and then adding the aqueous solution containing the diazo compound to the agitating tank to effect the coupling reaction.
(2) Methods that involve charging the agitating tank used in the present invention with an aqueous solution or water suspension containing the diazo component, and then adding an aqueous solution containing the coupler component dropwise to the agitating tank to effect the coupling reaction.
(3) Methods that involve dividing both the total quantity of an aqueous solution containing the coupler component, and the total quantity of an aqueous solution or water suspension containing the diazo component into a plurality of portions, and adding the divided portions of the two liquids "alternately" to water contained within the agitating tank used in the present invention, such that the apparent addition molar ratio between the two divided components remains constant, thereby subjecting the total quantity of both components to the coupling reaction.
(4) Methods that involve adding both the total quantity of an aqueous solution containing the coupler component, and the total quantity of an aqueous solution or water suspension containing the diazo component to water contained within the agitating tank used in the present invention, with the addition of both components conducted gradually and "continuously", such that the apparent addition molar ratio between the two components remains constant, thereby subjecting the total quantity of both components to the coupling reaction.

However, in terms of maximizing the productivity of the azo compound per unit of time, charging the agitating tank with the total quantity of the prepared diazo component, and then adding the total quantity of the coupler component in a single batch and conducting agitating to effect the coupling reaction is preferred.

In those cases where the production process of the present invention is applied to the production of a soluble azo pigment, first, a coupling reaction is conducted between a diazo component that includes a diazonium salt of an aromatic monoamine containing a water-soluble group, and a coupler component that includes a β-naphthol and/or β-oxynaphthoic acid.

There are no particular restrictions on the final blend ratio within the agitating tank of the raw materials used in the coupling reaction, namely the diazonium salt of the aromatic amine and the aromatic compound other than the aromatic amine used in generating the diazonium salt, but in those cases where the diazonium salt is a tetrazonium salt of an aromatic diamine, the molar ratio of diazonium salt : aromatic compound can be set, for example, within a range from 0.45:1.00 to 0.55 to 1.00, whereas in those cases where the diazonium salt is a diazonium salt of an aromatic monoamine, the molar ratio of diazonium salt: aromatic compound can be set, for example, within a range from 0.95:1.00 to 1.00:1.05.

In the production process of the present invention, raw materials such as those described above are placed in the agitating tank of an agitator described below, and the coupling reaction is then conducted.

In the production process of the present invention, an agitator is used that has a rotational axis fitted with a main agitating blade and an auxiliary agitating blade inside the agitating tank, wherein the main agitating blade has tips that are separated from the inner wall surface of the agitating tank so as to generate a rising liquid current during agitating, and is positioned at the lowest point on the central axis, whereas the auxiliary agitating blade has scrapers close to the inner wall of the agitating tank that are either arranged vertically, or inclined so as to push the liquid up during rotation, and has paddles that are connected to the scrapers and are either arranged vertically, or inclined so as to push the liquid down during rotation, and moreover, vertically adjacent agitating blades are positioned so that the top edge of the lower agitating blade exhibits a phase lag relative to the bottom edge of the upper agitating blade in the opposite direction to the direction of rotation of the rotational axis.

In this agitator, the raw materials and the like inside the agitating tank rise up the side wall of the tank on a discharge current generated from the bottom of the tank by the main agitating blade, and subsequently form a flow pattern that descends near the central axis, and at the same time, shear mixing occurs under the action of the scrapers of the auxiliary mixer, without canceling out the above circulation pattern.

The main agitating blade used in the present invention has tips that are separated from the inner wall surface of the agitating tank so as to generate a rising liquid current during agitating, and generates a powerful discharge force that functions as the origin for generating the overall circulating flow.

The spacing between the tips of the main agitating blade and the inner wall surface of the agitating tank need only be sufficient to ensure that a rising liquid current is generated during agitating, although in terms of obtaining a powerful circulating flow within the tank, the ratio of the total length of the agitating blade across the central axis relative to the internal diameter of the agitating tank is preferably within a range from 0.5 to 0.9.

In the case of soluble azo pigments such as C.I. Pigment Red 57:1, which have conventionally required high energy consumption agitating, from the viewpoint of achieving favorable mixing properties, the ratio of the total length of the agitating blade across the central axis relative to the internal diameter of the agitating tank is preferably within a range from 0.7 to 0.9.

Furthermore, although there are no particular restrictions on the shape of the main agitating blade, in terms of achieving a superior discharge force, a broad paddle is preferred. Furthermore, the main agitating blade is positioned at the lowest point on the central axis, and in order to maximize the contribution to the generation of a rising liquid current, is preferably formed so as to conform to the bottom surface of the tank.

In the present invention, the auxiliary agitating blade does not cancel out the rising liquid current generated by the main agitating blade, but rather contributes to the overall circulatory mixing within the tank. At the same time, the spacing between the outer tips of the blade and the tank is reduced so that the tips scrape the tank, thereby causing shear mixing and preventing adhesion of material to the tank walls. In other words, the auxiliary agitating blade includes scrapers at the tips of the blade close to the inner wall of the agitating tank that are either arranged vertically, or inclined so as to push the liquid up during rotation, and has paddles that are connected to the scrapers and are either arranged vertically, or inclined so as to push the liquid down during rotation.

Furthermore, although the auxiliary agitating blade may have only a single stage, in terms of achieving superior shear mixing and circulatory mixing properties, a plurality of stages is preferred, and for example, from 2 to 5 stages is particularly desirable.

In terms of the shape of the auxiliary agitating blade, the outer scraper portions and the inner-supported paddle portions may both be arranged vertically, but the scraper portions are preferably inclined so as to push the liquid up during rotation, and the paddle portions are preferably inclined so as to push the liquid down during rotation. Particularly in those cases where the liquid viscosity is low and the inertial current is dominant, inclined scrapers and paddles produce superior mixing properties.

Furthermore, in the present invention, amongst the plurality of agitating blades that includes the main agitating blade and the auxiliary agitating blade, because vertically adjacent agitating blades are positioned so that the top edge of the lower agitating blade exhibits a phase lag relative to the bottom edge of the upper agitating blade in the opposite direction to the direction of rotation of the rotational axis, the overall circulatory mixing properties within the agitating tank are markedly superior. This configuration has a particularly significant contribution on the overall circulatory mixing properties in those cases where the liquid viscosity is high, and in those regions where transmission of the inertial force is problematic.

In other words, in those cases where, for example, the phase difference between the agitating blades is 0 degrees, a phenomenon in which the entire body of liquid within the tank undergoes a single solid-type rotation, causing a marked deterioration in the mixing properties, becomes increasingly likely. As a more detailed description of the effects on the circulatory mixing properties of the phase difference between the agitating blades in the present invention, the rotating agitating blades generate a continual positive pressure at the leading surface of the blade and a negative pressure at the trailing edge. Accordingly, if the top edge of the lower adjacent agitating blade is positioned with a phase difference in the opposite direction to the direction of rotation, namely, so that it follows the upper agitating blade, then a pressure gradient develops between the leading surface of the lower agitating blade and the trailing surface of the upper agitating blade, thereby enabling the liquid to be carried upwards more efficiently in the region near the inner wall surface of the agitating tank. Of course, it is anticipated that this phase difference will also have the effect of canceling out the descending current in the vicinity of the central axis, but the separation between the paddles near the central axis is considerably larger than the separation between the scrapers, and consequently this canceling effect does not pose a significant problem.

Furthermore, although there are no particular restrictions on the phase difference, provided the vertically adjacent agitating blades are positioned such that the lower edge of the upper agitating blade leads, and the top edge of the lower agitating blade follows, specific examples of the phase difference are within a range from 10 to 70 degrees, and values from 10 to 45 degrees are preferred. This means that the agitator has agitating blades that are positioned such that a phase difference of 10 to 70 degrees, and preferably 10 to 45 degrees, occurs between the blades.

Particularly in the region of the scraper portions, the upper blade and the lower blade are preferably close together, as such an arrangement yields a greater effect on the overall circulatory mixing properties.

The method of supplying the raw materials may involve either charging the agitating tank with the raw materials and then setting the agitating blades within the agitator, or alternatively, adding the raw materials to a agitating tank in which the agitating blades have already been set.

In the production process of the present invention, in those cases where the diazo component and the coupler component are aqueous solutions or water suspensions, the viscosity within the system changes over time in accordance with the raw material concentration (the active component content), and the increasing quantity of the azo compound (and corresponding decrease of the raw materials) within the system. In those cases where it is desirable to increase the productivity of the azo compound as much as possible, energy consumption may be ignored, but in the present invention, in order to enable production to be conducted at a lower level of energy consumption than conventional processes, the viscosity within the system is preferably controlled on the basis of the expected final concentration of the azo compound.

In other words, in order to achieve a combination of a large quantity of azo compound generated by the coupling reaction, such as the insoluble azo pigment or a pre-laking azo dye or the like that acts as a precursor to the soluble azo pigment, and superior productivity at a lower level of energy consumption than that attainable using conventional processes, the diazo component and coupler component raw materials are preferably supplied in quantities such that, relative to the total quantity of components within the agitating tank, the quantity of azo compound generated by the coupling reaction, reported as a final concentration mass fraction, is within a range from 2 to 10%. Here, the term "final concentration" refers to the concentration at the point where, even if agitating is continued, the yield of the azo compound does not change.

The reaction rate of the coupling reaction is mainly altered by the viscosity of the mixture of the diazo component and the coupler component. If the final concentration is lower than 2%, then this indicates that the original viscosity is at a low level, and even if a coupling reaction is conducted using the agitator of the present invention, the effect of the invention in reducing the energy consumption is unfavorably small.

In the production process of the present invention, the coupling reaction is typically set to a temperature of 0 to 50°C, and the reaction is preferably conducted under agitating for a period of 5 minutes to 2 hours.

An insoluble azo pigment obtained in this manner can be used for coloring a medium, by subjecting the pigment to filtration and washing, and if necessary, drying, pulverizing, and classification.

In contrast, a soluble azo pigment is subjected to a coupling reaction in the same manner as that described above for an insoluble azo pigment, thereby producing an azo dye containing water-soluble groups as the azo compound, and subsequently conducting laking by reacting the azo dye containing water-soluble groups with an inorganic polyvalent metal salt under agitating.

In the present invention, when the coupling reaction of the raw materials is conducted inside the specific agitator, the raw materials added to the agitating tank need only be stirred to generate a uniform mixture, regardless of whether the pigment is an insoluble azo pigment or a soluble azo pigment. However, because the specific agitator used in the present invention provides superior agitating efficiency to conventional apparatus, a pre-laking azo compound can be produced by conducting the reaction at a required power of at least 0.1 but less than 1.0 kW/m³, for a period of 5 to 60 minutes, and in the case of a soluble azo pigment, at a required power 0.1 to 0.9 kW/m³ for a period of 5 to 30 minutes. In the production process of the present invention, at least the coupling reaction is preferably conducted under the above conditions, but in those cases where not only coupling is required, but also steps such as the heating and laking described below, at least one of these other steps may also be conducted by agitating at a required power of at least 0.1 but less than 1.0 kW/m³, for a period of 5 to 60 minutes.

The azo compound may also be coated with a treatment agent such as a rosin or wax. In those cases where the azo compound produced using the present invention is a soluble azo pigment such as a C.I. Pigment Red 57:1, at least one rosin selected from the group consisting of rosins containing abietic acid as the main component, hydrogenated rosins, disproportionated rosins, polymerized rosins, fumaric acid-modified rosins and maleic acid-modified rosins can be used jointly in an arbitrary step of the production process. Using a rosin-containing pigment obtained in this manner is preferred, as it enables a planographic printing ink that exhibits excellent transparency and tinting strength to be obtained.

The rosin can be added to the system at any step within the production process of the present invention. The rosin may be added in advance to the coupler component, or added directly to the agitating tank used in the present invention. Moreover, the rosin may also be added to the azo dye aqueous solution or water suspension that functions as a precursor to a soluble azo pigment.

Examples of inorganic polyvalent metal salts that can be used for laking include calcium chloride, barium chloride, and strontium chloride. The quantity used of the inorganic polyvalent metal salt is preferably adjusted appropriately in accordance with the number of water-soluble groups within each molecule of the azo dye containing the water-soluble group, and the valency of the metal ions within the inorganic polyvalent metal salt. The use of at least a sufficient quantity of the inorganic polyvalent metal salt to convert the water-soluble groups within each molecule of the azo dye containing the water-soluble group to a salt form is preferred.

The laking reaction is preferably conducted with the temperature set within a range from 0 to 50°C, and under agitating for a period of 10 minutes to 3 hours.

In those cases where a soluble azo pigment is produced in accordance with the production process of the present invention, the coupling reaction and the laking reaction may be conducted in separate agitating tanks, but conducting the coupling reaction and the laking reaction in the same agitating tank (namely, a partial one-pot method) is preferred in terms of removing the necessity of providing an extra agitating tank, preventing loss of yield caused by transferal of the reaction liquid, saving the time and energy consumption associated with transferring the reaction liquid, and improving the productivity per unit of time.

A preferred process for producing a soluble azo pigment according to the present invention is a process that includes: coupling a diazonium salt of an aromatic monoamine that contains a carboxyl group and/or sulfonic acid group (a water-soluble group), and a β-naphthol and/or β-oxynaphthoic acid in the manner described above, thereby forming an azo compound containing carboxyl groups and/or sulfonic acid groups (water-soluble groups), and subsequently conducting laking by reacting the azo compound containing carboxyl groups and/or sulfonic acid groups (water-soluble groups) with an inorganic polyvalent metal salt, under agitating within the same agitator as that used for the coupling.

By conducting subsequent heating of the azo compound such as an insoluble azo pigment, soluble azo pigment or condensed azo pigment obtained in accordance with the production process of the present invention, the applicability of the azo compound to the required application can be further improved, for example by increasing the uniformity of the surface state of the pigment particles, altering the aspect ratio of the pigment particles, narrowing the particle size distribution of the pigment particles, and controlling the crystal type.

This heating can be conducted, for example, by heating at a predetermined temperature in the presence of a surfactant or a water-soluble base. Specifically, aging may be conducted by agitating for a period within a range from 10 minutes to 3 hours with the temperature set to 60 to 100°C.

Heating of a suspension containing a soluble azo pigment can be conducted with the liquid of the suspension adjusted to an acidic or alkali state, but conducting heating with the pH of the liquid within a range from pH 11 to 14 is preferred, as it enables better arrangement of the particle configuration.

For the same reasons as those listed above for the laking reaction, the heating is preferably conducted within the same agitating tank as that used for the laking reaction (namely, a partial one-pot method). In other words, the heating of the produced azo compound is preferably conducted within the same agitating tank as that used for the coupling reaction. Of the various possibilities, conducting the coupling reaction, the laking reaction and the heating all within the same agitating tank (a full one-pot method) is the most preferred option in terms of reducing energy consumption and improving the productivity. In this most preferred production process, all the steps for the coupling reaction, the laking reaction, and the heating are conducted within the specific agitator described above, enabling the energy consumption to be reduced markedly.

The soluble azo pigment obtained in this manner can be used for coloring a medium, by subjecting the pigment to filtration and washing, and if necessary, drying, pulverizing, and classification.

The azo compound obtained using the production process of the present invention may be used as a pigment without further modification, or may be used as an azo dye that functions as a precursor to an azo pigment, and can be used for all manner of applications for coloring printing inks, coating agents and molded items and the like, as well as in the preparation of inkjet recording inks, electrostatic latent image developing toners, and liquid crystal color filters and the like.

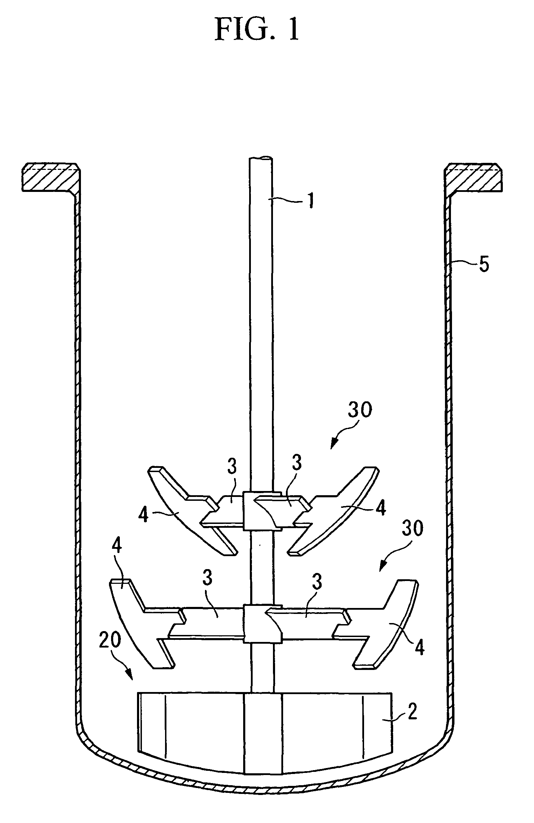

FIG. 1 shows an agitator used in Examples, wherein an upper blade, a middle blade and a broad bottom paddle 2 are fitted to a rotational axis 1 inside a agitating tank 5. In this FIG. 1, the broad bottom paddle 2 functions as the main agitating blade 20, and the middle blade and upper blade function as auxiliary agitating blades 30. This agitator includes the circular cylindrically shaped agitating tank 5, and a central axis, which is positioned within the center of the tank and is fitted sequentially with the upper blade, the middle blade and the lower bottom paddle 2. The positioning of these blades assumes that the direction of rotation of the central axis is in a clockwise direction when viewed from above.

In this configuration, the upper and middle agitating blades each have tips that are separated from the inner wall surface of the agitating tank 5, and a single blade arm is formed from a scraper 4, which is shaped like a letter "T" on its side, and a paddle 3 that is positioned adjacent to the scraper, with each agitating blade formed from a pair of these blade arms. Both of the agitating blades have the scrapers 4 close to the inner wall of the agitating tank 5, in an inclined arrangement that pushes the liquid up during rotation, and have the paddles 3 connected to the scrapers 4 in an inclined arrangement that pushes the liquid down during rotation. Moreover, vertically adjacent agitating blades are positioned so that the top edge of the lower agitating blade exhibits a phase lag of 30° relative to the bottom edge of the upper agitating blade in the opposite direction to the direction of rotation of the rotational axis 1. In FIG. 1, the fact that the middle blade appears larger than the upper blade is intended to reflect the phase difference between the two blades. Both the middle blade and the upper blade are designed such that the ratio of the total length of the agitating blade across the central axis relative to the internal diameter of the agitating tank 5 is 0.85.

As the agitating blades are rotated, the scrapers 4 promote the upward movement of the mixture of the diazo component and the coupler component inside the tank, thereby forming a rising liquid current. This rising liquid current changes to a descending liquid current near the central axis. During rotation of the agitating blades, the paddles 3 also promote the downward movement through the center of the tank of the mixture of the diazo component and the coupler component. Configurations in which both the paddles 3 and the scrapers 4 are inclined exhibit superior mixing properties to configurations in which both the paddles 3 and the scrapers 4 are vertical. Moreover, in the apparatus shown in FIG. 1, because the upper blade and the middle blade are arranged with a phase lag therebetween, the mixing properties can be improved compared with the case where agitating is conducted using only a single auxiliary agitating blade.

Furthermore, in the bottom paddle 2 at the lower point, the tips of the paddles close to the tank inner wall surface are both bent 45° in the opposite direction to the direction of rotation, thereby reducing the resistance accompanying the agitating. The bottom paddle 2 prevents the mixture of the diazo component and the coupler component from accumulating in the lower regions of the agitating tank.

In the agitating tank, a flow pattern is formed in which the mixture of the diazo component and the coupler component in the bottom portion of the tank that is stirred by the bottom paddle 2 is pushed up the tank by the actions of the scrapers 4 of the middle blade and the scrapers 4 of the upper blade, whereas the mixture of the diazo component and the coupler component in the upper portion of the tank is pushed down by the paddles 3 of the upper blade and the paddles 3 of the middle blade, and as a result, the mixing of the mixture within the tank is enhanced, and the coupling reaction becomes smoother and more uniform.

### EXAMPLES

A description of specifics of the present invention is provided below using a series of Examples. In the following description, unless stated otherwise, "parts" and "%" refer to mass-referenced values.

### (Example 1)

34.8 parts of 4-aminotoluene-3-sulfonic acid was dispersed in 50 parts of water, 22.2 parts of 35% hydrochloric acid was added, ice and water were added, and with the temperature held at 0°C, 32.5 parts of a 40% aqueous solution of sodium nitrite was added in a single batch, thereby yielding 650 parts of a suspension containing a diazo component. Next, 35.9 parts of 3-hydroxy-2-naphthoic acid was dispersed in 400 parts of 50°C water, 69 parts of a 25% aqueous solution of caustic soda was added and dissolved, and ice and water were then added, thus forming 980 parts of a 10°C aqueous solution containing a coupler component.

The total quantity of this aqueous solution containing the coupler component was placed inside a circular cylindrically shaped agitating tank 5 with an internal capacity of 2 liters, a rotational axis 1 fitted with each of the agitating blades shown in FIG. 1 was positioned within the center of the agitating tank 5, and the rotational axis 1 was then fixed to a motor, thereby completing the setup of the agitator. Subsequently, the rotational axis 1 was rotated at a rotational rate of 100 rpm, and with the aqueous solution containing the coupler component undergoing constant agitating, the total quantity of the aforementioned suspension containing the diazo component was added in a single batch. The reaction temperature was maintained at 10°C to 15°C. After 10 minutes, completion of the coupling reaction was confirmed using the H acid color test described below. Subsequently, 147 parts of an aqueous solution of a 10% disproportionated rosin sodium salt was added, and following agitating for a further 60 minutes, the pH was adjusted to 12.5, yielding an azo dye suspension. The required power for the coupling from the point following completion of the addition of the suspension containing the diazo component until completion of the coupling reaction was within a range from 0.1 to 0.9 kW/m³.

To the agitating tank 5 containing the azo dye suspension was added 80 parts of a 35% aqueous solution of calcium chloride, and the resulting mixture was stirred for 60 minutes to complete the laking reaction, thus yielding a suspension containing a C.I. Pigment 57:1. This suspension was heated by agitating for 90 minutes at a temperature of 80°C.

In both the laking step and the heating step, the rotational rate of the agitating blades was set to the same rate as that used in the coupling reaction, and the coupling reaction, the laking reaction and the heating were conducted consecutively in the same agitating tank 5, with no change of the tank.

Ice was then added, the liquid temperature was cooled to 60°C, and hydrochloric acid was used to adjust the pH to a value of 8.5. Subsequently, the product was filtered, washed with water, dried for 10 hours at 100°C, and then pulverized, yielding 93 parts of a dried pigment powder of the C.I. Pigment 57:1.

### (H Acid Color Test)

A dilute aqueous solution of sodium hydroxide containing 1-amino-8-naphthol-3,5-disulfonic acid (H acid) was used as the color test reagent (the reagent for coloring). The point where no coloring occurred upon reaction with the coupling reaction liquid was taken as the end point of the coupling reaction.

### (Example 2)

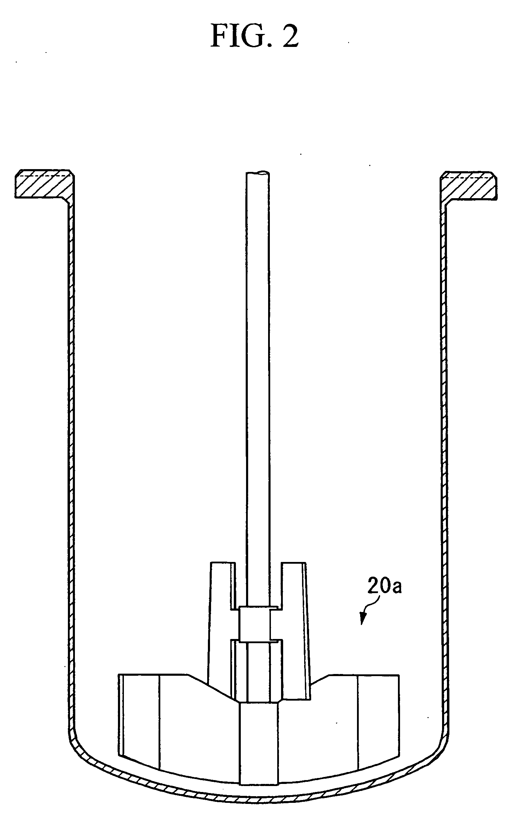

With the exception of conducting only the coupling and laking steps in the same manner as Example 1, and conducting the heating step inside an agitator shown in FIG. 2 in Comparative Example 1 described below, production was conducted in the same manner as Example 1. Although the power consumption was slightly higher than that observed in Example 1, the power consumption was not as high as that of either of Comparative Examples described below.

### (Example 3)

With the exception of conducting only the coupling step in the same manner as Example 1, and conducting the laking and heating steps inside an agitator shown in FIG. 2 in Comparative Example 1 described below, production was conducted in the same manner as Example 1. Although the power consumption was higher than that observed in Example 2, the power consumption was still not as high as that of either of Comparative Examples described below.

### (Comparative Example 1)

A suspension containing a diazo component and an aqueous solution containing a coupler component were prepared in the same manner as Example 1. Instead of using the agitating blades of Example 1, a reaction apparatus fitted with conventional agitating blades 20a shown in FIG. 2 was charged with the coupler component, and the suspension containing the diazo component was then added to the stirrer tank while the agitating blades were rotated at a rotational rate of 300 rpm. The reaction temperature was maintained at 10°C to 15°C. After 50 minutes, completion of the coupling reaction was confirmed using the H acid color test. The required power for the coupling from the point following completion of the addition of the suspension containing the diazo component until completion of the coupling reaction was within a range from 0.1 to 3.0 kW/m³.

Subsequently, 147 parts of an aqueous solution of a 10% disproportionated rosin sodium salt was added, and following agitating for a further 60 minutes, the pH was adjusted to 12.5, yielding an azo dye suspension.

Using this azo dye suspension, laking and heating were conducted in the same manner as Example 1, using the reaction apparatus with the agitating blades shown in FIG. 2, thereby yielding 93 parts of a dried pigment powder of the C.I. Pigment 57:1.

### (Comparative Example 2)

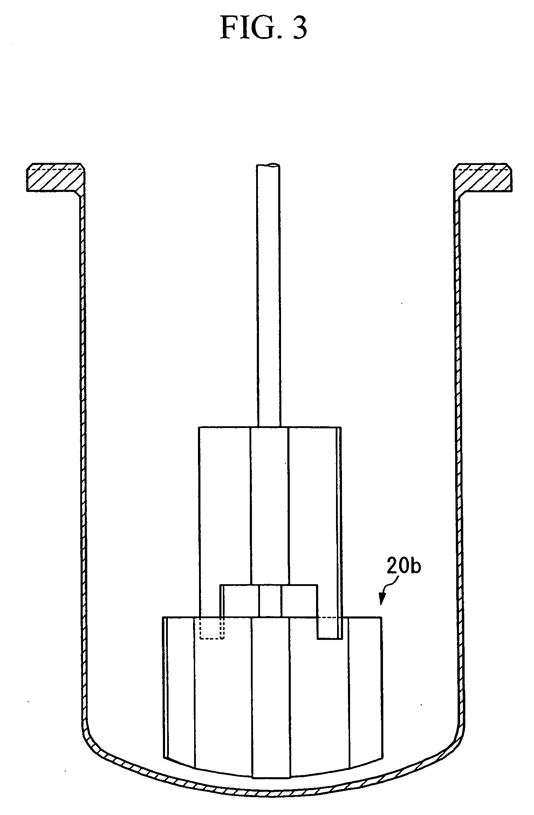

A suspension containing a diazo component and an aqueous solution containing a coupler component were prepared in the same manner as Example 1. Instead of using the agitating blades of Example 1, a reaction apparatus fitted with Fullzone agitating blades 20b shown in FIG. 3 was charged with the coupler component, and the suspension containing the diazo component was then added to the stirrer tank while the agitating blades were rotated at a rotational rate of 300 rpm. The reaction temperature was maintained at 10 to 15°C. After 40 minutes, completion of the coupling reaction was confirmed using the H acid color test. The required power for the coupling from the point following completion of the addition of the suspension containing the diazo component until completion of the coupling reaction was within a range from 0.1 to 1.5 kW/m³.

Subsequently, 147 parts of an aqueous solution of a 10% disproportionated rosin sodium salt was added, and following agitating for a further 60 minutes, the pH was adjusted to 12.5, yielding an azo dye suspension.

Using this azo dye suspension, laking and heating were conducted in the same manner as Example 1, using the reaction apparatus with the agitating blades shown in FIG. 3, thereby yielding 93 parts of a dried pigment powder of the C.I. Pigment 57:1.

The coupling reaction times from the point following completion of the addition of the suspension containing the diazo component until completion of the coupling reaction in Example 1, Comparative Example 1 and Comparative Example 2 are shown in Table 1.

**[Table 1]**

| Table 1 (Coupling Reaction Time) | |
|---|---|
| | Coupling Time (minutes) |
| Example 1 | 10 |
| Comparative Example 1 | 50 |
| Comparative Example 2 | 40 |

Compared with the reaction times for Comparative Example 1 and Comparative Example 2, the time taken to complete the coupling reaction in Example 1 conducted in accordance with the production process of the present invention was remarkably short, indicating superior mixing properties. Furthermore, as described above, the power required for agitating in Example 1 was markedly less than that required in Comparative Examples 1 and 2, meaning that in the production process of Example 1, a dramatic reduction in the total power consumption can be expected.

If the power consumption in Comparative Example 1 from the start to the finish of the coupling reaction is deemed to be 100, then the power consumption levels in Example 1 and Comparative Example 2 are as shown in Table 2.

**[Table 2]**

| Table 2 (Power Consumption of Coupling Reaction Step) | |
|---|---|
| | Power Consumption (%) |
| Example 1 | 14 |
| Comparative Example 1 | 100 |
| Comparative Example 2 | 67 |

Compared with Comparative Example 1 and Comparative Example 2, the power consumption in the coupling reaction step in Example 1 was markedly lower, and it is evident that the process of the present invention is an energy-conserving production process.
According to the present invention, the properties of low energy consumption and high productivity, which have generally been considered to exist in a trade-off type relationship, can both be achieved favorably, enabling favorable production of an azo compound such as an insoluble azo pigment, or an azo dye that functions as a precursor to an azo pigment.

In cases such as Example 1, where the C.I. Pigment 57:1 is produced using a full one-pot method, the laking and heating are conducted using the same agitator as that used for the coupling. If the power consumption during only the laking step of Comparative Example 1, for the 60 minutes following addition of the calcium chloride aqueous solution, is deemed to be 100, then the power consumption in Example 1 and Comparative Example 2 are as shown in Table 3.

**[Table 3]**

| Table 3 (Power Consumption during Laking Reaction Step) | |
|---|---|
| | Power Consumption (%) |
| Example 1 | 16 |
| Comparative Example 1 | 100 |
| Comparative Example 2 | 43 |

It is clear that the power consumption in the laking reaction step of Example 1, even if calculated solely for that step, is markedly lower than that of Comparative Examples 1 and 2, indicating favorable energy conservation.

From the above results it is evident that in the production of a soluble azo pigment, which includes a laking step and a greater number of production steps than the production of an insoluble azo pigment, by applying the production process of the present invention, using either a favorable partial one-pot method or the most preferred full one-pot method, not only can the loss of yield caused by transferal of the product from the reaction tank and the energy consumption associated with that transferal be reduced, but the total productivity right through to the production of the final pigment can also be increased, and the energy consumption can be better suppressed.

### (Test Example 1)

Mixtures containing 6 parts of the dried pigment powder of the C.I. Pigment 57:1 obtained in Example 1, Comparative Example 1 or Comparative Example 2 (hereafter referred to as "the pigment"), 39 parts of a planographic printing ink vehicle containing a rosin-modified phenolic resin, and 5 parts of light oil were dispersed at 40°C and a compression pressure of 15 bar using a triple roll mill manufactured by Buhler AG. Firstly, the mixtures were dispersed for 5 minutes using double roll mill, and then passed 3 times through the triple roll mill, thus preparing a series of simulated planographic printing inks (planographic printing inks prior to inclusion of a drier).

### (Tinting Strength)

Light-colored inks were prepared by mixing 0.2 parts of each of the simulated planographic printing inks with 2.0 parts of a white ink (titanium oxide). The tinting strength of each ink was determined using a Gretag apparatus (manufactured by GRETAG Limited). The tinting strength for the simulated planographic printing ink of Comparative Example 1 was deemed to be 100, and the corresponding numerical tinting strengths for the inks of Example 1 and Comparative Example 2 are shown in Table 4.

Subsequently, using each of the simulated planographic printing inks, the dispersibility of the pigment within the ink and the transparency of the ink in the printed image were evaluated. The results are shown in Table 4. The method and criteria used for evaluating the dispersibility and transparency are as described below.

### (Dispersibility)

The dispersibility of each of the simulated planographic printing inks was evaluated using a grind gauge.
A: very good, B: good, C: fair, D: poor

### (Transparency)

Each of the simulated planographic printing inks was thinly spread on a substrate and dried so as to form a colored, dried film. Then, the transparency of the resulting colored image was evaluated visually.
A: very good, B: good, C: fair, D: poor

**[Table 4]**

| | Tinting Strength | Transparency | Dispersibility |
|---|---|---|---|
| Example 1 | 101 | B | B |
| Comparative Example 1 | 100 | B | B |
| Comparative Example 2 | 99 | B | B |

From Table 4 it is clear that by using an azo compound obtained via the present invention, a printing ink that exhibits similar tinting strength, transparency and dispersibility to conventional inks can be prepared.

### INDUSTRIAL APPLICABILITY

According to the production process of the present invention, because an azo compound is produced by conducting at least the coupling reaction within an agitator fitted with agitating blades of a specific shape that differs from conventional blades, an azo compound such as a soluble azo pigment that can be used for preparing a printing ink with similar levels of tinting strength, transparency and dispersibility to conventional inks can be produced with a combination of low energy consumption and high productivity, properties which had conventionally been thought to be mutually opposing. Accordingly, the present invention is very useful industrially.

## Claims

1. A process for producing an azo compound, comprising conducting coupling of a diazo component formed from a diazonium salt of an aromatic amine, and a coupler component formed from an aromatic compound other than the aromatic amine used in forming the diazonium salt, wherein
at least the coupling is conducted within an agitator that has a rotational axis fitted with a main agitating blade and an auxiliary agitating blade inside an agitating tank, and
in the agitator,
the main agitating blade has tips that are separated from an inner wall surface of the agitating tank so as to generate a rising liquid current during agitating, and is positioned at a lowest point on a central axis,
whereas the auxiliary agitating blade has scrapers close to an inner wall of the agitating tank that are either arranged vertically, or inclined so as to push liquid up during rotation, and has paddles that are connected to said scrapers and are either arranged vertically, or inclined so as to push liquid down during rotation, and
vertically adjacent agitating blades are positioned so that a top edge of a lower agitating blade exhibits a phase lag relative to a bottom edge of an upper agitating blade in an opposite direction to a direction of rotation of the rotational axis.

2. A process for producing an azo compound according to claim 1, wherein the agitator has agitating blades that are arranged so as to generate a phase lag of 10 to 70 degrees.

3. A process for producing an azo compound according to claim 1 or 2, further comprising conducting heating of an obtained azo compound inside the same agitating tank as that used for the coupling reaction.

4. A process for producing an azo compound according to any one of claims 1-3, wherein the diazo component is a diazonium salt of an aromatic monoamine containing a carboxyl group and/or sulfonic acid group, and the coupler component is a β-naphthol and/or β-oxynaphthoic acid.

5. A process for producing an azo compound according to any one of claims 1-4, wherein agitating is conducted at a required power within a range from 0.1 to 0.9 kW/m³ for a period of 5 to 30 minutes.

6. A process for producing an azo compound according to claim 1, comprising:
conducting coupling of a diazonium salt of an aromatic monoamine containing a carboxyl group and/or sulfonic acid group, and a β-naphthol and/or β-oxynaphthoic acid in accordance with a process for producing an azo compound according to any one of claims 1-5, thereby producing the azo compound containing the carboxyl group and/or sulfonic acid group; and
subsequently conducting laking by reacting the azo compound containing the carboxyl group and/or sulfonic acid group with an inorganic polyvalent metal salt, under agitating within the same agitator as that used for the coupling.

7. A process for producing an azo compound according to claim 6, further comprising conducting heating of an obtained azo compound inside the same agitating tank as that used for the coupling and the laking.

## Patentansprüche

1. Verfahren zur Herstellung einer Azoverbindung umfassend Durchführung einer Kupplung einer Diazokomponente, gebildet aus einem Diazoniumsalz eines aromatischen Amines, und einer Kupplungskomponente, gebildet aus einer aromatischen Verbindung anders als das aromatische Amine, welches zur Bildung des Diazoniumsalzes benutzt wurde, wobei
zumindest die Kupplung durchgeführt wird innerhalb eines Rührers, welcher eine Drehachse, ausgestattet mit einem Hauptrührblatt und einem zusätzlichen Rührblatt, innerhalb eines Rührbehälters Besitzt und
in dem Rührer
das Hauptrührblatt Spitzen hat, welche getrennt sind von einer Innenwandoberfläche des Rührbehälters, so dass ein steigender Flüssigkeitsstrom während des Rührens erzeugt wird, und positioniert ist an einem tiefsten Punkt auf einer zentralen Achse,
wobei das zusätzliche Rührblatt Schaber nahe einer Innenwand des Rührbehälters hat, welche entweder senkrecht oder geneigt angeordnet sind, so dass Flüssigkeit während der Drehung hochgedrückt wird, und Schaufeln hat, welche mit besagten Schabern verbunden sind und welche entweder senkrecht oder geneigt angeordnet sind, so dass Flüssigkeit während der Drehung runtergedrückt wird und
senkrecht benachbarte Rührblätter so angeordnet sind, dass eine Oberkante eines unteren Rührblattes eine Phasenverzögerung relativ zu einer Unterkante eines oberen Rührblattes in einer Gegenrichtung zu einer Drehrichtung der Drehachse besitzt.

2. Verfahren zur Herstellung einer Azoverbindung gemäß Anspruch 1, wobei der Rührer Rührblätter besitzt, welche so angeordnet sind, dass eine Phasenverzögerung von 10 bis 70 Grad erzeugt wird.

3. Verfahren zur Herstellung einer Azoverbindung gemäß Anspruch 1 oder 2, überdies umfassend die Erwärmung einer erhaltenen Azoverbindung innerhalb desselben Rührbehälters, wie der, der für die Kupplungsreaktion genutzt wurde, durchzuführen.

4. Verfahren zur Herstellung einer Azoverbindung gemäß einem der Ansprüche 1-3, wobei die Diazokomponente ein Diazoniumsalz eines aromatischen Monoamines, welches eine Carboxygruppe und/oder Sulfonsäuregruppe enthält, ist und die Kupplungskomponente β-Naphthol und/oder β-Oxynaphthoesäure ist.

5. Verfahren zur Herstellung einer Azoverbindung gemäß einem der Ansprüche 1-4, wobei Rühren durchgeführt wird mit einer erforderlichen Energie im Bereich von 0,1 bis 0,9 kW/m³ für eine Dauer von 5 bis 30 Minuten.

6. Verfahren zur Herstellung einer Azoverbindung gemäß Anspruch 1, umfassend Durchführung einer Kupplung eines Diazoniumsalzes eines aromatischen Monoamines, welches eine Carboxygruppe und/oder Sulfonsäuregruppe enthält und β-Naphthol und/oder β-Oxynaphthoesäure gemäß eines Verfahrens zur Herstellung einer Azoverbindung gemäß einem der Ansprüche 1-5, wodurch die Azoverbindung, welche die Carboxygruppe und/oder Sulfonsäuregruppe enthält, hergestellt wird, und
anschließende Durchführung einer Verlackung durch Reaktion der Azoverbindung, welche die Carboxygruppe und/oder Sulfonsäuregruppe enthält, mit einem anorganischen mehrwertigen Metallsalz unter Rühren innerhalb desselben Rührers, wie der, der für die Kupplung genutzt wurde.

7. Verfahren zur Herstellung einer Azoverbindung gemäß Anspruch 6, überdies umfassend die Erwärmung einer erhaltenen Azoverbindung innerhalb desselben Rührbehälters, wie der, der für die Kupplung und die Verlackung genutzt wurde, durchzuführen.

## Revendications

1. Procédé de fabrication d'un composé azoïque, comprenant la conduite d'un couplage d'un composant diazoïque, formé à partir d'un sel de diazonium d'une amine aromatique, et d'un composant de couplage, formé à partir d'un composé aromatique autre que l'amine aromatique utilisée dans la formation du sel de diazonium, dans lequel
au moins le couplage est effectué à l'intérieur d'un agitateur qui possède un axe de rotation muni d'une lame d'agitation principale et une lame d'agitation auxiliaire à l'intérieur d'une cuve agitée et
dans l'agitateur,
la lame d'agitation principale a des bouts qui sont séparés d'une surface de paroi interne de la cuve agitée de manière à générer un courant ascendant de liquide au cours de l'agitation et est positionnée au niveau d'un point le plus bas sur un axe central,
tandis que la lame d'agitation auxiliaire a des racloirs à proximité de la paroi interne de la cuve agitée, qui sont disposés verticalement ou inclinés pour faire monter le liquide pendant une rotation, et possède des palettes qui sont connectées aux dits racloirs et sont disposées verticalement ou inclinées de manière à pousser le liquide vers le bas pendant une rotation, et
des lames d'agitation adjacentes verticalement sont disposées de telle manière qu'un bord supérieur d'une lame d'agitation inférieure présente un retard de phase par rapport à un bord inférieur d'une lame d'agitation supérieure dans une direction opposée à une direction de rotation de l'axe de rotation.

2. Procédé de fabrication d'un composé azoïque selon la revendication 1, dans lequel l'agitateur a des lames d'agitation qui sont disposées de manière à générer un retard de phase de 10 à 70°.

3. Procédé de fabrication d'un composé azoïque selon la revendication 1 ou 2 comprenant en outre la conduite de chauffage d'un composé azoïque obtenu à l'intérieur de la même cuve agitée que celle-ci utilisée pour la réaction de couplage.

4. Procédé de fabrication d'un composé azoïque selon l'une quelconque des revendications 1 à 3, dans lequel le composant diazoïque est un sel de diazonium d'une monoamine aromatique contenant un groupe carboxyle et/ou un groupe d'acide sulfonique, et le composant de couplage est un β-naphthol et/ou l'acide β-oxynaphthoïque.

5. Procédé de fabrication d'un composé azoïque selon l'une quelconque des revendications 1 à 4, dans lequel l'agitation est effectuée à une puissance requise dans la plage de 0,1 à 0,9 kW/m³ pour une période de 5 à 30 minutes.

6. Procédé de production d'un composé azoïque selon la revendication 1, comprenant:
la conduite d'un couplage d'un sel de diazonium d'une amine aromatique contenant un groupe carboxyle et/ou un groupe d'acide sulfonique et d'un β-naphthol et/ou l'acide β-oxynaphthoïque selon un procédé de fabrication d'un composé azoïque selon l'une quelconque des revendications 1 à 5 pour produire le composé azoïque contenant le groupe carboxyle et/ou le groupe d'acide sulfonique et
ensuite la conduite d'un lacquage (la formation de pigments) par réaction du composé azoïque contenant le groupe carboxyle et/ou le groupe d'acide sulfonique avec un sel de métal polyvalent inorganique sous agitation à l'intérieur de la même cuve que celle-ci utilisée pour le couplage.

7. Procédé de fabrication d'un composé azoïque selon la revendication 6, comprenant en outre la conduite d'un chauffage d'un composé azoïque obtenu à l'intérieur de la même cuve agitée que celle-ci utilisée pour le couplage et la formation de pigments.
